# EUROPEAN PATENT SPECIFICATION

(11) **EP 1 820 318 B1**
(45) Date of publication and mention of the grant of the patent: **10.01.2018**
(21) Application number: 05810951.3
(22) Date of filing: 30.11.2005
(51) Int. Cl.: H04L 29/06

(54) **A METHOD FOR IDENTIFYING REAL-TIME TRAFFIC HOP BY HOP IN AN INTERNET NETWORK**
VERFAHREN ZUM SPRUNGWEISEN IDENTIFIZIEREN VON ECHTZEIT-VERKEHR IN EINEM INTERNET-NETZWERK
PROCEDE D'IDENTIFICATION DU TRAFIC EN TEMPS REEL SAUT PAR SAUT DANS UN RESEAU INTERNET

(30) Priority: 30.11.2004 CN 200410097563
(43) Date of publication of application: 22.08.2007
(73) Proprietor: ADTRAN GmbH, 10557 Berlin (DE)
(72) Inventor: LEI, Zhi Ping, Beijing 100102 (CN); LIU, Zhen, Beijing 100025 (CN); TIAN, Li Gang, Beijing 100016 (CN)
(74) Representative: Brachmann, Roland W.
(86) International application number: PCT/EP2005/056352
(87) International publication number: WO 2006/058891

(56) References cited:
- WO-A-02/11400
- US-A1- 2003 018 912
- ANUP RAO ET AL: "Real Time Streaming Protocol(RTSP); draft-rao-rtsp-00.txt;" IETF STANDARD-WORKING-DRAFT, INTERNET ENGINEERING TASK FORCE, IETF, CH, 9 October 1996 (1996-10-09), XP015034267 ISSN: 0000-0004
- ST JOHNS M ET AL: "Considerations on the use of a Service Identifier in Packet Headers; rfc3639.txt;" IETF STANDARD, INTERNET ENGINEERING TASK FORCE, IETF, CH, October 2003 (2003-10), XP015009421 ISSN: 0000-0003
- HANDLEY V JACOBSON ISI/LBNL M: "SDP: Session Description Protocol; rfc2327.txt" IETF STANDARD, INTERNET ENGINEERING TASK FORCE, IETF, CH, April 1998 (1998-04), XP015008111 ISSN: 0000-0003

## Description

### Technical Field

The present invention relates to a method of transporting Voice over IP (VoIP), and more particularly to a method for identifying real-time traffic hop by hop in an Internet network.

### Technical Background

Traditional telephone technology uses circuit switching to transport voice. But as Internet usage has become more widespread, VoIP (Voice over IP) technology applying the Internet Protocol (IP) to transport voice traffic has been developed rapidly in recent years, and the meaning and the design goal of VoIP have also gone beyond its literal meaning, in other words, the VoIP technology refers not only to traditional telephone technology providing sessions between two parties, but also to a two-party and even multiparty multimedia communication technology involving voice and moving picture data and supporting various types of intelligent traffic.

IP is a routing protocol based on data packet transmission, which is located in the third layer of the IP protocol suite, and above which there are two optional protocols: Transmission Control Protocol (TCP) and User Datagram Protocol (UDP). The TCP protocol guarantees reliable and error-free transmission of data packets. When a plurality of packets are transmitted at the same time, the TCP protocol guarantees that all packets can reach their respective destinations, and will be submitted to the upper application programs in the correct sequence. The UDP protocol is a relatively simple protocol, which mainly aims at one-off transactions or transactions with higher real time requirement, and does not provide a sequencing and retransmitting mechanism. Above TCP protocol and UDP protocol, there are a plurality of different applications and traffics, which themselves determine whether the TCP protocol or the UDP protocol is to be adopted.

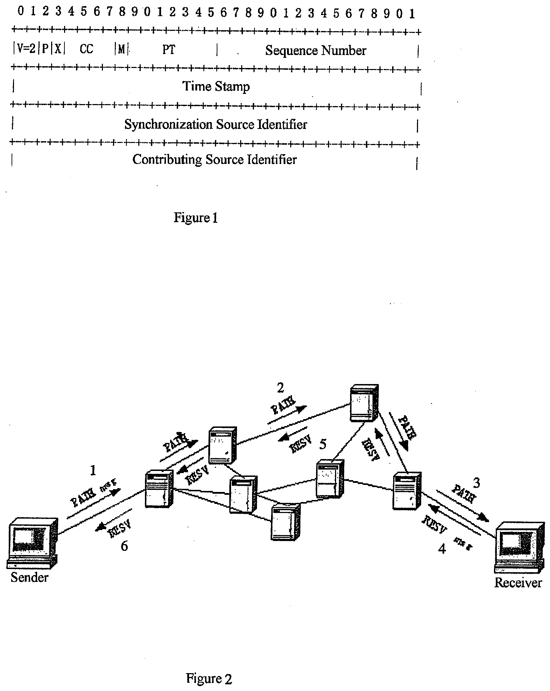

The UDP is unable to avoid losing packets and ensure an ordered transmission of packets. However, a Real-time Transport Protocol (RTP) and a Real-time Transport Control Protocol (RTCP) running above the UDP help implement these functions. Figure 1 shows the format of an RTP header, wherein V represents a Version field of 2 bits, P represents a Padding field of 1 bit, X represents an Extension field of 1 bit, CC represents a Contributing Source (CSRC) Count field of 4 bits, M represents a Marker field of 1 bit, and PT represents a Payload Type field of 7 bits. Subsequently, there are a Sequence Number field of 16 bits, a Timestamp field of 32 bits, a Synchronization Source (SSRC) Identifier field of 32 bits, and a Contributing Source (CSRC) Identifier field of 32 bits. The RTP protocol provides peer-to-peer data transmission traffic having real-time characteristics, which can be used to transport voice and moving picture data. In general, a protocol data unit of RTP is carried by UDP packets. Moreover, in order to reduce delay as far as possible, payload of voice is usually very short. Another protocol cooperating with the RTP is RTCP protocol, which is the control protocol for RTP and is used to monitor traffic quality and transport information to the parties participating in a session. When an RTP session is set up, an RTCP session page will be opened implicitly. In other words, when a UDP port number is allocated to an RTP session to deliver media packets, an independent port number will be allocated to RTCP information. The UDP port number of an RTP packet is generally an even number, and the UDP port number of the corresponding RTCP packet will be the next odd number. The RTP and RTCP may use any pair of UDP ports between 1024 and 65535. However, in case a port number has not been allocated explicitly, the ports 5004 and 5005 will be allocated as default.

An Internet network comprises a computer and a router. A data packet to be transmitted over the Internet passing through a router is referred to as a hop. A hop represents a data packet's transmission through a router in a network consisting of interconnected network segments or its sub-networks. At present, VoIP technology uses signaling negotiation and a Resource-Reservation Protocol (RSVP) to guarantee transmission of real-time traffic in the Internet network.

The signaling negotiation means that both communicating parties should establish a connection via control signaling before the communication is started. First, the sender searches for the receiver through a server, i.e. searches the IP address of the receiver, and then the sender negotiates with the receiver about the parameters and establishes the connection therewith. After the negotiation, the sender will know the port number and the traffic type of the receiver.

The RSVP is a signaling protocol, which provides a method that establishes a channel having a bandwidth resource guarantee in the IP network before information is transmitted. Traditionally, an IP router is responsible only for forwarding packets, obtaining the address of the next hop router from the routing protocol. However, the RSVP, being similar to the signaling protocol of a circuit-switching system, informs each node (IP router) to be passed through of a data packet, and negotiates with the ending port to provide a quality guarantee for this data packet. Its basic principle is shown in figure 2:
- The sender sends to the receiver a PATH message, which contains a traffic identifier (i.e. the destination address) and its traffic characteristics. The traffic characteristics include an upper and lower limit of bandwidth as needed, delay and delay jitter etc., which is shown as 1 in figure 1.
- The message is transported by the routers hop by hop along the path, and each router has been informed to reserve resources in advance, thereby establishing a "path status" information table, which contains the source address of the preceding hop in the PATH message, which is shown as 2, 3 in figure 1.

- The receiver, on receiving this message, calculates the resource needed from respective traffic characteristics and QoS required, and then sends to its upstream node a resource reservation request (RESV) message, which contains mainly, as a parameter, bandwidth required to be reserved. The RESV message is shown as 4 in figure 1.
- The RESV message returns back to the sender along the original sending path of PATH. The routers along the path, after receiving the RESV message, call their respective access control programs to determine whether the traffic will be accepted. If the traffic is accepted, the routers allocate the bandwidth and the buffer space for the traffic according to the requirement, record the traffic status information, and then forward the RESV message upstream; If the traffic is refused, the receivers return an error information to the receiver to terminate the call. This is shown as 5 in figure 1.
- When the last router receives the RESV message and accepts the request, it sends back to the receiver a confirmation message, which is shown as 6 in figure 1.

The RSVP protocol has solved the problem of resource reservation, and to a great extent provides a QoS guarantee for the IP network. Therefore, it is an important method of allocation of resources given an extremely low number of subscribers. But with the passing of time, and the network having grown explosively, the RSVP has been faced with more and more problems, which mainly include: the routers along the path were originally designed for forwarding the data packets, and not specifically for resource reservation; with a dramatic increase in network traffic, the data forwarded by the routers increases rapidly; in order to improve the forwarding speed, the routers have already undertaken a heavy load, and thus it is impossible for the routers to process the complex Resource Reservation Protocols for each item of data any more. Therefore the network will break down or be unable to respond to new calls owing to the fact that there are too many calls and not enough resources to be allocated therefor. Furthermore, when there is a busy line or a router fault, etc., if the route is modified, a relatively time-consuming RSVP procedure needs to be performed again.

Since the above Resource Reservation Protocol is unable to carry out real-time transmission for a large number of subscribers, other methods of solving the above problems have to be found. One of the methods is to identify the real-time traffic by using port numbers.

As described above, the TCP and the UDP are both transport protocols located above the IP layer, and the processing interface between the IP and its upper layer. Both the TCP and the UDP contain, within their respective headers, information including source address port number and destination address port number, etc. The port numbers of the TCP and the UDP are used to distinguish respective IP addresses of a plurality of applications running on individual equipment.

Since a plurality of network applications may run on the same computer, it has to be guaranteed that the software applications on the destination computer for receiving data packets from the source host are correct, and that the responses can be sent to the correct applications on the source host. The procedure is actually implemented by using the port number of the TCP or the UDP. The fields of the source port and destination port in the headers of the abovementioned TCP and UDP are actually identifying information used to show identity in sending and receiving procedures. The combination of an IP address and a port number is referred to as a 'socket'.

In general, a server is identified by a well-known port number. For example, as far as each TCP/IP implementation is concerned, the TCP port number of each of the FTP servers is 21, the TCP port number of each of the Telnet servers is 23, and the UDP port number of each TFTP (Trivial File Transfer Protocol) server is 69. These port numbers are assigned and managed by the Internet Assigned Numbers Authority (IANA).

The IANA defines three kinds of ports: Well Known Ports, Registered Ports and Dynamic and/or Private Ports, the respective port numbers of which are listed below:
- Well Known Ports: from 0 to 1023;
- Registered Ports: from 1024 to 49151;
- Dynamic and/or Private Ports: from 49152 to 65535.

Cisco Corporation once adopted a method for identifying priorities of sessions by means of the port numbers (Frame Relay IP RTP Priority, Cisco IOS Release 12.0 (7) T) to solve a transformation problem for VoIP packets to enter the Frame Relay network from the Ethernet. Specifically, there is a priority bit of a frame used in the Frame Relay network, from which the Frame Relay network can identify the order of the frames to be relayed. If an Ethernet subscriber and another subscriber of the Frame Relay network are having a real-time session under the RTP protocol, messages (or frames) from the Ethernet have to be mapped at the Gateway to frames of the Frame Relay network with a priority. As the port number of UDP had not been registered for the RTP protocol, the gateway could not identify the RTP frames, and was thus unable to map the RTP frame to a frame with high priority. Therefore, the RTP frames would be given lower priority, or would even be discarded. To solve the above problem, Cisco Corporation sets all frames with UDP port numbers of between 1024 and 65535 as having high priority, thus the RTP frame will be relayed preferentially owing to the high priority.

However, since the port numbers cover a wide range from 1024 to 65535 by means of the above solution, frames which should be given low priority are set as high priority as well, which leads to a system more vulnerable to network attacks, and authorized subscribers are not well served. Thus the frames with high priority are not served as they should be, instead they are served with low priority. Therefore, a session could be unsuccessfully set up or interrupted.

[ANUP RAO ET AL: "Real Time Streaming Protocol(RTSP); draft-rao-rtsp-00.txt;" IETF STANDARD-WORKING-DRAFT, INTERNET ENGINEERINGTASK FORCE, IETF, CH, 9 October 1996 (1996-10-09), XP015034267 ISSN: 0000-0004"] describes the Real Time Streaming Protocol (RTSP), which is an application-level protocol for control over the delivery of data with real-time properties. RTSP provides an extensible framework to enable controlled, on-demand delivery of real time data, such as audio and video. RSTP is intended to control multiple data delivery sessions, provide a means for choosing delivery channels such as UDP, multicast UDP and TCP, and delivery mechanisms based upon RTP. [ST JOHNS M ET AL: "Considerations on the use of a Service Identifier in Packet Headers; rfc3639.txt;" IETF STANDARD, INTERNET ENGINEERING TASK FORCE, IETF, CH, October 2003 (2003-10), XP015009421 ISSN: 0000-0003] relates to considerations on the use of a service Identifier in Packet Headers, in particular to the use of IP protocol number fields and payload protocol port or service fields to identify particular services that may be associated with that port number or protocol number.

### Summary of the Invention

An object of the present invention is to provide a method by which real-time multimedia traffic represented by voice and moving images can be transmitted over the Internet, so that the delay and jitter can be contained within acceptable limits. To achieve the above object, the technical solution of the present invention is implemented as follows:
A method for identifying real-time traffic hop by hop in an Internet network including a sender, a receiver, and routers in the network, which comprises steps of registering source port number and destination port number of the User Datagram Protocol (UDP) respectively for Real-time Transport Protocol (RTP), Real-time Transport Control Protocol (RTCP) and Real-time Transport Streaming Protocol (RTSP) with the Internet Assigned Numbers Authority (IANA) under the Internet Engineering Task Force (IETF) arrangement, then adding a Session ID field to identify sessions respectively in the headers of the above Real-time Transport Protocol (RTP), Real-time Transport Control Protocol (RTCP) and Real-time Transport Streaming protocol (RTSP).

According to one aspect of the present invention, the above Session ID field for identifying a session contains 32 bits.

According to another aspect of the present invention, both the above source port number and the destination port number of the User Datagram Protocol (UDP) registered respectively for Real-time Transport Protocol (RTP), Real-time Transport Control Protocol (RTCP) and Real-time Transport Streaming Protocol (RTSP) are any number between 1024 and 65535.

According to yet another aspect of the present invention, both the above source port number and the destination port number of the User Datagram Protocol (UDP) registered respectively for Real-time Transport Protocol (RTP), Real-time Transport Control Protocol (RTCP) and Real-time Transport Streaming Protocol (RTSP) are any number between 1024 and 49151.

A method for identifying real-time traffic hop by hop in an Internet network including a sender, a receiver, and routers in the network, which comprises steps of registering the destination port number of the User Datagram Protocol (UDP) respectively for Real-time Transport Protocol (RTP), Real-time Transport Control Protocol (RTCP) and Real-time Transport Streaming Protocol (RTSP) with the Internet Assigned Numbers Authority (IANA) under the Internet Engineering Task Force (IETF) arrangement.

According to another aspect of the present invention, the above destination port number of the User Datagram Protocol (UDP) registered respectively for Real-time Transport Protocol (RTP), Real-time Transport Control Protocol (RTCP) and Real-time Transport Streaming Protocol (RTSP) is any number between 1024 and 65535.

According to yet another aspect of the present invention, the above destination port number of the User Datagram Protocol (UDP) registered respectively for Real-time Transport Protocol (RTP), Real-time Transport Control Protocol (RTCP) and Real-time Transport Streaming Protocol (RTSP) is any number between 1024 and 49151.

The method for identifying real-time traffic hop by hop in an Internet network according to the present invention has the following advantages:
1. The present invention enables frames of the Real-time Transport protocol (RTP) to be identified hop by hop during the packet's transmission. A priority can be assigned to real-time traffic transmission owing to the fact that each router is capable of identifying RTP frames.
2. The present invention provides a VoIP traffic mechanism other than Resource Reservation Protocol. Compared to a Resource Reservation Protocol capable of accommodating only a few network subscribers, the present invention can be adopted in an actual Internet network, and can be adopted also in the particular case of a large number of network subscribers.

### Brief Description of the Drawings

Figure 1 is a diagram of Real-time Transport Protocol (RTP) header format in the prior art;
Figure 2 is a diagram showing the process of establishing a transmission path and reserving a resource by using a Resource Reservation Protocol (RSVP);
Figure 3 is a diagram of Real-time Transport Protocol (RTP) header format according to the present invention.

### Detailed Description of the Embodiments

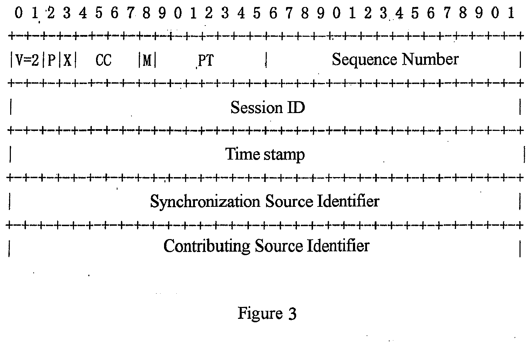

Figure 3 shows the first embodiment of the present invention. When a real-time traffic RTP frame is transmitted over an Internet network, the sender first transports the above RTP frame packed by the UDP, IP to the first router. Since the source port number and destination port number of the UDP have been registered respectively for RTP, RTCP and RTSP with the Internet Assigned Numbers Authority (IANA) under the Internet Engineering Task Force (IETF) arrangement, when the router receives the abovementioned real-time traffic frame it can determine from the destination port number of the UDP contained in the frame that the frame is a real-time frame. Therefore, the router forwards the frame to the next router with high priority, and there will no longer be any need for a process of reserving a resource. In the same way, the next router also determines from the destination port number of the UDP of the real-time frame that the frame is a real-time frame, and forwards it on further to the next router. In this way, real-time traffic hop by hop can be identified in an Internet network up to the receiver.

In the prior art, the source port number and destination port number of the UDP are used to identify different sessions. However, in the present invention, as the source port number and destination port number of the UDP have been used for registration a Session ID field of 32 bits to identify different sessions is added to the RTP header.

The second embodiment of the present invention will be described as follows. When a real-time traffic RTP frame is transmitted over an Internet network, the sender first transports the above RTP frame packed by the UDP, IP to the first router. Since the destination port number of the UDP has been registered respectively for RTP, RTCP and RTSP with Internet Assigned Numbers Authority (IANA) under the Internet Engineering Task Force (IETF) arrangement, when the router receives the above real-time traffic frame, it determines from the destination port number of the UDP of the real-time frame that the frame is a real-time frame, and thus forwards the frame to the next router with higher priority. There will no longer be any need for a process of reserving a resource. In the same way, the next router also determines from the destination port number of the UDP of the real-time frame that the frame is a real-time frame, and forwards it on further to the next router. In this way, real-time traffic hop by hop can be identified in an Internet network, up to the receiver.

When using the method of the above second embodiment, only the destination port number is registered whereas the source port number can serve as the identification field to identify different sessions. Therefore, a Session ID field will no longer be needed to add in the RTP header. That is to say, the header RTP will remain the same as that of the prior art (namely figure 1).

In summary, the methods of the present invention can be used to identify the frames of the Real-time Transport Protocol (RTP) hop by hop during the packet's transmission, and to provide priority for real-time traffic transport, so as to provide a QoS guarantee for real-time traffic even in the case of dramatically increasing network traffic.

## Claims

1. A method for identifying real-time traffic hop by hop in an Internet network including a sender, a receiver, and routers in the network, which comprises steps of
- registering source port number and destination port number of the User Datagram Protocol respectively for Real-time Transport Protocol, Real-time Transport Control Protocol and Real-time Transport Streaming Protocol with the Internet Assigned Numbers Authority under the Internet Engineering Task Force arrangement,
- then adding a Session ID field (Session ID) to identify sessions respectively in the headers of the above Real-time Transport Protocol, Real-time Transport Control Protocol and Real-time Transport Streaming protocol,
- when the router receives a frame of the real-time traffic, the router determines from the registered destination port number of the User Datagram Protocol contained in the frame that this frame is a real-time frame and the router forwards the frame to the next router with high priority.

2. The method for identifying real-time traffic hop by hop in an Internet network as claimed in claim 1, wherein the above Session ID field (Session ID) to identify session contains 32 bits.

3. The method for identifying real-time traffic hop by hop in an Internet network as claimed in claim 1, wherein both the above source port number and the destination port number of the User Datagram Protocol registered respectively for Real-time Transport Protocol, Real-time Transport Control Protocol and Real-time Transport Streaming Protocol are any number between 1024 and 65535.

4. The method for identifying real-time traffic hop by hop in an Internet network as claimed in claim 1, wherein both the above source port number and the destination port number of the User Datagram Protocol registered respectively for Real-time Transport Protocol, Real-time Transport Control Protocol and Real-time Transport Streaming Protocol are any number between 1024 and 49151.

5. A method for identifying real-time traffic hop by hop in an Internet network including a sender, a receiver, and routers in the network, which comprises steps of
- registering the destination port number of the User Datagram Protocol respectively for Real-time Transport Protocol, Real-time Transport Control Protocol and Real-time Transport Streaming Protocol with the Internet Assigned Numbers Authority under the Internet Engineering Task Force arrangement,
- when the router receives a frame of the real-time traffic, the router determines from the registered destination port number of the User Datagram Protocol contained in the frame that this frame is a real-time frame and the router forwards the frame to the next router with high priority.

6. The method for identifying real-time traffic hop by hop in an Internet network as claimed in claim 5, wherein the above destination port number of the User Datagram Protocol registered respectively for Real-time Transport Protocol, Real-time Transport Control Protocol and Real-time Transport Streaming Protocol is any number between 1024 and 65535.

7. The method for identifying real-time traffic hop by hop in an Internet network as claimed in claim 5, the above destination port number of the User Datagram Protocol registered respectively for Real-time Transport Protocol, Real-time Transport Control Protocol and Real-time Transport Streaming Protocol is any number between 1024 and 49151.

## Patentansprüche

1. Verfahren zum Identifizieren von Echtzeit-Verkehr in einzelnen Hops in einem Internet-Netzwerk, das einen Sender, einen Empfänger und Router im Netzwerk enthält, wobei das Verfahren Schritte umfasst zum
- Registrieren einer Quellenanschlussnummer und einer Zielanschlussnummer des User Datagram Protocol jeweils für das Real-Time Transport Protocol, das Real-Time Transport Control Protocol und das Real-Time Transport Streaming Protocol bei der Internet Assigned Numbers Authority im Rahmen der Internet-Engineering-Task-Force-Vereinbarung,
- nachfolgenden Hinzufügen eines Sitzungs-ID-Felds (Sitzungs-ID), um jeweils Sitzungen in den Headern des obigen Real-Time Transport Protocol, des Real-Time Transport Control Protocol und des Real-Time Transport Streaming Protocol zu identifizieren,
- wenn der Router einen Rahmen des Echtzeit-Verkehrs empfängt, ermittelt der Router aus der im Rahmen enthaltenen registrierten Zielanschlussnummer des User Datagram Protocol, dass dieser Rahmen ein Echtzeit-Rahmen ist und der Router leitet den Rahmen mit hoher Priorität an den nächsten Router weiter.

2. Verfahren zum Identifizieren von Echtzeit-Verkehr in einzelnen Hops in einem Internet-Netzwerk nach Anspruch 1, wobei das obige Sitzungs-ID-Feld zur Identifikation der Sitzung 32 Bits beinhaltet.

3. Verfahren zum Identifizieren von Echtzeit-Verkehr in einzelnen Hops in einem Internet-Netzwerk nach Anspruch 1, wobei sowohl die obige Quellenanschlussnummer als auch die Zielanschlussnummer des User Datagram Protocol, die jeweils für das Real-Time Transport Protocol, das Real-Time Transport Control Protocol und das Real-Time Transport Streaming Protocol registriert sind, beliebige Nummern zwischen 1024 und 65535 sind.

4. Verfahren zum Identifizieren von Echtzeit-Verkehr in einzelnen Hops in einem Internet-Netzwerk nach Anspruch 1, wobei sowohl die obige Quellenanschlussnummer als auch die Zielanschlussnummer des User Datagram Protocol, die jeweils für das Real-Time Transport Protocol, das Real-Time Transport Control Protocol und das Real-Time Transport Streaming Protocol registriert sind, beliebige Nummern zwischen 1024 und 49151 sind.

5. Verfahren zum Identifizieren von Echtzeit-Verkehr in einzelnen Hops in einem Internet-Netzwerk, das einen Sender, einen Empfänger und Router im Netzwerk enthält, wobei das Verfahren Schritte umfasst zum
- Registrieren der Zielanschlussnummer des User Datagram Protocol jeweils für das Real-Time Transport Protocol, das Real-Time Transport Control Protocol und das Real-Time Transport Streaming Protocol bei der Internet Assigned Numbers Authority im Rahmen der Internet-Engineering-Task-Force-Vereinbarung,
- wenn der Router einen Rahmen des Echtzeit-Verkehrs empfängt, ermittelt der Router aus der im Rahmen enthaltenen registrierten Zielanschlussnummer des User Datagram Protocol, dass dieser Rahmen ein Echtzeit-Rahmen ist, und der Router leitet den Rahmen mit hoher Priorität an den nächsten Router weiter.

6. Verfahren zum Identifizieren von Echtzeit-Verkehr in einzelnen Hops in einem Internet-Netzwerk nach Anspruch 5, wobei die obige Zielanschlussnummer des User Datagram Protocol, die jeweils für das Real-Time Transport Protocol, das Real-Time Transport Control Protocol und das Real-Time Transport Streaming Protocol registriert ist, eine beliebige Nummer zwischen 1024 und 65535 ist.

7. Verfahren zum Identifizieren von Echtzeit-Verkehr in einzelnen Hops in einem Internet-Netzwerk nach Anspruch 5, wobei die obige Zielanschlussnummer des User Datagram Protocol, die jeweils für das Real-Time Transport Protocol, das Real-Time Transport Control Protocol und das Real-Time Transport Streaming Protocol registriert ist, eine beliebige Nummer zwischen 1024 und 49151 ist.

## Revendications

1. Procédé d'identification de trafic en temps réel saut par saut dans un réseau Internet comprenant un émetteur, un récepteur, et des routeurs dans le réseau, qui comprend des étapes consistant à :
- enregistrer le numéro de port source et le numéro de port de destination du protocole datagramme utilisateur respectivement pour le protocole de transport en temps réel, le protocole de commande de transport en temps réel, et le protocole de transfert de flux continu en temps réel auprès de l'autorité chargée de l'assignation des numéros Internet dans le cadre de l'agencement du Groupe d'étude sur l'ingénierie Internet,
- puis ajouter un champ d'ID de session (Session ID) pour identifier des sessions respectivement dans les en-têtes du protocole de transport en temps réel, du protocole de commande de transport en temps réel, et du protocole de transfert de flux continu en temps réel susmentionnés,
- lorsque le routeur reçoit une trame du trafic en temps réel, le routeur détermine à partir du numéro de port de destination enregistré du protocole datagramme utilisateur contenu dans la trame que cette trame est une trame en temps réel et le routeur transmet la trame au routeur suivant avec une priorité élevée.

2. Procédé d'identification de trafic en temps réel saut par saut dans un réseau Internet selon la revendication 1, dans lequel le champ d'ID de session susmentionné (Session ID) pour identifier une session contient 32 bits.

3. Procédé d'identification de trafic en temps réel saut par saut dans un réseau Internet selon la revendication 1, dans lequel à la fois le numéro de port source et le numéro de port de destination susmentionnés du protocole datagramme utilisateur enregistrés respectivement pour le protocole de transport en temps réel, le protocole de commande de transport en temps réel et le protocole de transfert de flux continu en temps réel sont un numéro quelconque entre 1024 et 65535.

4. Procédé d'identification de trafic en temps réel saut par saut dans un réseau Internet selon la revendication 1, dans lequel à la fois le numéro de port source et le numéro de port de destination susmentionnés du protocole datagramme utilisateur enregistrés respectivement pour le protocole de transport en temps réel, le protocole de commande de transport en temps réel et le protocole de transfert de flux continu en temps réel sont un numéro quelconque entre 1024 et 49151.

5. Procédé d'identification de trafic en temps réel saut par saut dans un réseau Internet comprenant un émetteur, un récepteur, et des routeurs dans le réseau, qui comprend des étapes consistant à :
- enregistrer le numéro de port de destination du protocole datagramme utilisateur respectivement pour le protocole de transport en temps réel, le protocole de commande de transport en temps réel, et le protocole de transfert de flux continu en temps réel auprès de l'autorité chargée de l'assignation des numéros Internet dans le cadre de l'agencement du Groupe d'étude sur l'ingénierie Internet,
- lorsque le routeur reçoit une trame du trafic en temps réel, le routeur détermine à partir du numéro de port de destination enregistré du protocole datagramme utilisateur contenu dans la trame que cette trame est une trame en temps réel et le routeur transmet la trame au routeur suivant avec une priorité élevée.

6. Procédé d'identification de trafic en temps réel saut par saut dans un réseau Internet selon la revendication 5, dans lequel le numéro de port de destination susmentionné du protocole datagramme utilisateur enregistré respectivement pour le protocole de transport en temps réel, le protocole de commande de transport en temps réel et le protocole de transfert de flux continu en temps réel est un numéro quelconque entre 1024 et 65535.

7. Procédé d'identification de trafic en temps réel saut par saut dans un réseau Internet selon la revendication 5, dans lequel le numéro de port de destination susmentionné du protocole datagramme utilisateur enregistré respectivement pour le protocole de transport en temps réel, le protocole de commande de transport en temps réel et le protocole de transfert de flux continu en temps réel est un numéro quelconque entre 1024 et 49151.
